## Europäisches Patentamt

## European Patent Office

## Office européen des brevets

(19)

(11) Numéro de publication: **0 220 092**
**B1**

(12) **FASCICULE DE BREVET EUROPEEN**

(45) Date de publication du fascicule du brevet:
27.12.89

(51) Int. Cl.⁴: **F16D 27/00**, F16D 65/34,
F16D 23/12

(21) Numéro de dépôt: **86402029.2**

(22) Date de dépôt: **17.09.86**

(54) **Dispositif de commande d'un moyen d'accouplement tel que par exemple un embrayage ou un variateur de vitesse ou un frein ou analogue.**

(30) Priorité: **11.10.85 FR 8515069**

(43) Date de publication de la demande:
**29.04.87 Bulletin 87/18**

(45) Mention de la délivrance du brevet:
**27.12.89 Bulletin 89/52**

(84) Etats contractants désignés:
**DE GB IT**

(56) Documents cités:
**BE-A- 548 275**
**DE-C- 213 524**
**FR-A- 2 523 743**
**FR-A- 2 541 793**
**US-A- 2 571 848**
**US-A- 2 941 133**
**US-A- 4 440 035**

(73) Titulaire: **VALEO, 64 Avenue de la Grande Armée,
F-75017 Paris(FR)**

(72) Inventeur: **Grunberg, Pierre, 10 Villa de Cronstadt,
F-75019 Paris(FR)**
Inventeur: **Texier, Roger, 93 rue Anatole France,
F-93120 La Courneuve(FR)**

(74) Mandataire: **CABINET BONNET-THIRION, 95 Boulevard
Beaumarchais, F-75003 Paris(FR)**

ACTORUM AG

## Description

L'invention se rapporte à un dispositif de commande d'un moyen d'accouplement tel que par exemple un embrayage ou un variateur de vitesse ou un frein et concerne notamment un tel dispositif motorisé dans lequel un mécanisme de liaison comportant généralement un pignonnerie et un secteur denté, est agencé entre le moteur et un moyen d'actionnement dudit moyen d'accouplement, comportant par exemple un levier monté pivotant autour d'un arbre.

L'invention a plus particulièrement pour objet un perfectionnement apporté à ce type de dispositif pour en améliorer "l'irréversibilité", c'est-à-dire la qualité de pouvoir commander avec précision le déplacement dudit levier d'actionnement, quel que soit le sens d'actionnement, et un évitant en particulier tout "recul" du moteur après chaque période d'actionnement, sous l'effet des forces de réaction retransmises au mécanisme de liaison par le moyen d'accouplement lui-même.

Le brevet français N° 2 523 743 et son certificat d'addition N° 2 541 793 décrivent plusieurs modes de réalisation d'un tel dispositif de commande motorisé permettant d'actionner un moyen d'accouplement du type défini ci-dessus. Un tel système a en effet notamment été mis au point pour la commande motorisée d'un embrayage à friction d'un véhicule automobile, dans le but de supprimer la traditionnelle pédale de débrayage, mais il peut aussi convenir à la commande d'un variateur de vitesse (notamment à courroie poussante et poulies à géométrie variable) voire, d'un frein.

Selon un mode de réalisation décrit dans les documents cités ci-dessus, l'arbre d'entraînement du moteur comporte une portion formant vis sans fin engrenant avec une pignonnerie elle-même en prise avec un secteur denté lié à un arbre d'actionnement. Ce dernier est solidaire d'un levier en forme de fourchette qui, en pivotant, coopère avec une butée mobile suivant un axe (butée d'embrayage, par exemple) susceptible d'actionner un ressort d'accouplement en forme de diaphragme. Un moyen élastique modérateur d'effort de manoeuvre et en outre associé au secteur denté et/ou à la pignonnerie pour réduire l'effort demandé au moteur électrique tout au long de la course d'accouplement ou de désaccouplement, ce qui permet d'utiliser un moteur électrique de relativement faible puissance, par exemple comparable, pour un embrayage normal, à un moteur d'essuie-glace d'une automobile.

Dans un mode de réalisation particulièrement avantageux, les moyens élastiques modérateurs d'effort se résument à un simple ressort couplé à un pignon spécial de ladite pignonnerie.

Ce type de dispositif peut fonctionner de façon satisfaisante à condition d'obtenir une transmission "irréversible" entre le moteur et le moyen d'accouplement. On peut obtenir cette "irréversibilité" au niveau de la liaison mécanique entre la vis sans fin et la pignonnerie, en choisissant de façon appropriée l'inclinaison des filets. Le problème devient cependant particulièrement critique lorsque le moteur est alimenté par des séries d'impulsions électriques, chaque impulsion devant provoquer un déplacement prédéterminé de la butée mobile. Si l'"irréversibilité" du mécanisme est imparfaite, on observe un recul de l'ensemble de la pignonnerie après chaque impulsion, provoqué par la réaction du moyen d'accouplement lui-même. Le cumul de tous ces reculs peut affecter très sérieusement la précision de positionnement de la butée mobile et rendre par conséquent la commande peu fidèle, voire impossible. Or, on a constaté par ailleurs, que l'"irréversibilité" obtenu au niveau de la vis sans fin et de la pignonnerie, était difficilement reproductible industriellement, compte tenu d'une puissance motrice volontairement limitée. L'invention a pour but de résoudre ce problème.

Dans cet esprit, l'invention concerne un dispositif de commande d'un moyen d'accouplement tel qu'embrayage, variateur de vitesse, frein ou analogue, du type comportant un moteur électrique muni d'un arbre d'entraînement, un organe d'actionnement dudit moyen d'accouplement et un mécanisme de liaison comprenant notamment une vis sans fin et au moins un pignon en prise avec celle-ci, agencé entre ledit pignon et ledit organe d'actionnement, caractérisé en ce qu'il comporte un moyen de freinage couplé audit arbre d'entraînement dudit moteur.

De préférence, le moyen de freinage exerce son action de freinage sur une portion de l'arbre, au voisinage de la vis sans fin. De plus, le moyen de freinage peut être agencé "flottant" pour permettre son autocentrage par rapport à l'arbre du moteur.

L'invention sera mieux comprise et d'autres avantages de celle-ci apparaîtront plus clairement à la lumière de la description qui va suivre d'un système conforme à son principe, donnée uniquement à titre d'exemple et faite en référence aux dessins annexés dans lesquels:

— La figure 1 représente schématiquement un ensemble comprenant un embrayage à friction et un dispositif de commande de cet embrayage, conforme à l'invention; et

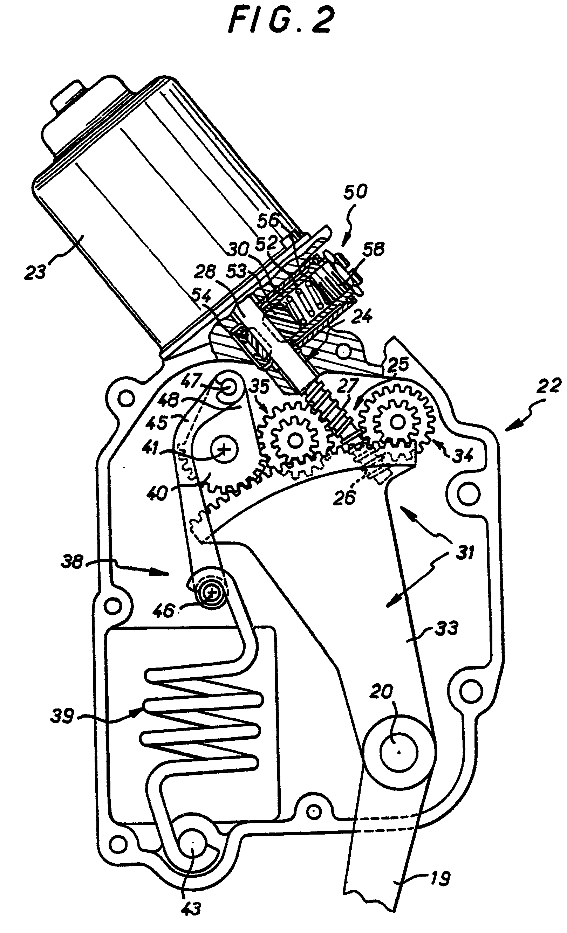

— La figure 2 représente le dispositif de commande seul, à plus grande échelle.

Le mode de réalisation représenté aux dessins concerne une application de l'invention à un embrayage à friction commandé par un ressort en forme de diaphragme, notamment pour véhicule automobile.

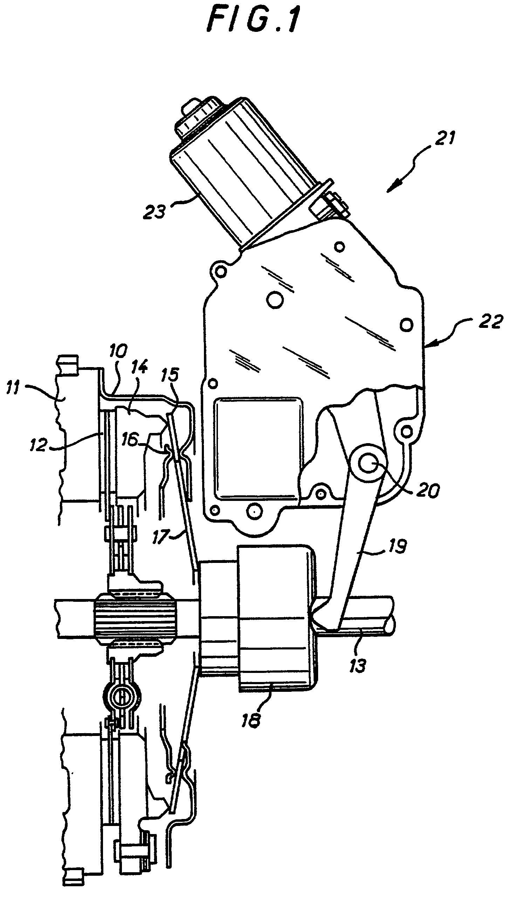

L'embrayage illustré à la figure 1 comporte un couvercle 10 adapté à être fixé au volant 11 du moteur du véhicule automobile. Ce volant 11 constitue un plateau de réaction. L'embrayage comporte également un disque de friction 12 qui est accouplé à l'arbre primaire 13 de la boîte de vitesse du véhicule automobile. Le disque 12 est adapté à être serré entre le plateau de réaction 11 et un plateau de pression 14, sous l'action de serrage élastique d'un ressort 15 en forme de diaphragme. Le diaphragme 15 prend appui sur une saillie circulaire 16 du couvercle 10 et présente dans se région centrale des doigts 17 adaptés à être poussés (vers la gauche en considérant la figure 1) par une butée de débrayage 18, lorsqu'on désire faire passer l'embrayage de son état d'engagement représenté à la figure 1 à un état de désengagement où la butée 18, en poussant sur le diaphragme 15, fait cesser l'action de serrage sur le plateau de pression 14, ce qui libère le disque de friction 12.

La butée 18 portée par l'arbre 13 est poussée par un levier 19 en forme de fourchette, solidaire d'un arbre 20 qui s'étend transversalement par rapport à l'arbre 13. L'ensemble de l'arbre 20 et du levier 19 constitue l'organe d'actionnement de l'embrayage puisqu'il déplace la butée 18 pour modifier l'état d'engagement ou de désengagement de l'embrayage.

Le dispositif de commande 21 de l'arbre 20 et du levier 19 est motorisé. Plus précisément, il comporte un boîtier 22, relativement plat, et un moteur électrique 23 fixé extérieurement audit boîtier. L'arbre d'entraînement 24 du moteur 23 pénètre dans le boîtier 22 et se termine par une portion filetée 25 comportant deux tronçons 26, 27 aux filets inversés. Une partie lisse 28 de l'arbre 24, située entre le moteur 23 et la portion filetée 25 traverse une cavité 30 du boîtier, ouverte vers l'extérieur, dont il sera question plus loin. Le boîtier 22 abrite en outre un mécanisme de liaison 31 agencé entre le moteur 23 et l'organe d'actionnement précité. Ce mécanisme de liaison comporte un secteur denté 33 lié à l'arbre 20 et pivotant par rapport à cet axe deux pignons 34; 35 comportant chacun deux roues dentées disposées côte-à-côte, coaxialement. Pour chaque pignon, l'une des roues dentées engrène avec le secteur denté 33 et l'autre roue dentée avec l'un des tronçons de filet, 26 ou 27. Les deux pignons tourillonnent autour d'axes parallèles situés de part et d'autre de la portion filetée 25. Cet agencement, connu en soi, présente l'avantage d'absorber les réactions axiales sur la portion filetée et l'arbre du moteur. Par ailleurs, le mécanisme de liaison comporte un moyen élastique modérateur d'effort de manoeuvre 38, comprenant un ressort hélicoïdal 39 lié à un pignon 40 monté en rotation autour d'un axe 41 fixé au boîtier et engrenant avec le secteur denté 33. Le ressort 39, travaillant en traction, est accroché par une extrémité au boitier, au moyen d'un axe d'ancrage 43 situé au voisinage de l'arbre 20 mais quelque peu espacé de celui-ci. L'autre extrémité du ressort est attelée à un bras double 45 coudé, constitué de deux pièces plates identiques maintenues espacées l'une de l'autre par deux broches 46, 47. Le bras double est relié au ressort 39 par la broche 46 et au pignon 40 par la broche 47 fixée à ce dernier en un point espacé de l'axe 41. Plus précisément, le pignon 40 est conformé avec, d'une part, une portion circulaire dentée et, d'autre part, un prolongement radial 48 portant la broche 47 et s'étendant à l'opposé de la broche 46 par rapport à l'axe 41. Le bras double s'articule ainsi au voisinage du pignon 40 et du secteur denté 33, sans entraver les mouvements de ces derniers, en raison de sa constitution, comme cela ressort clairement des dessins.

Ce système modérateur d'effort 38 assiste le moteur électrique 23 pendant les manoeuvres d'embrayage et de débrayage. En position embrayée, c'est-à-dire telle que représentée sur les dessins, les points de pivotement constitués par les broches 46, 47 d'une part et les axes 41, 43 d'autre part, sont alignés. Le secteur denté 33 n'exerce donc aucune action notable sur la butée et l'embrayage est maintenu engagé par le diaphragme avec la pleine force élastique de ce dernier.

Pour débrayer, on applique au moteur électrique 23 une série d'impulsions électriques de polarité convenable par rapport au sens d'actionnement désiré. Ce faisant, le secteur denté 33, l'arbre 20 et le levier 19 ainsi que la butée 18 surmontent la résistance élastique du diaphragme 15 et provoquent le débrayage en libérant le disque 12. Au cours de cette manoeuvre de désengagement, le ressort modérateur d'effort 39 intervient avantageusement avec une loi analogue à celle à laquelle obéit lui-même le diaphragme 15, ce qui permet un effort de manoeuvre réduit.

Pour réengager l'embrayage, la manoeuvre s'effectue d'une manière tout aussi facile mais en sens inverse. Là également, le moteur électrique 23 n'a à développer qu'un faible effort de manoeuvre.

Dans l'exemple représenté, le secteur denté est solidaire de l'arbre 20 et l'entraîne directement en rotation. Il est cependant tout-à-fait possible d'associer au secteur denté 33 un système de rattrapage d'usure de la garniture d'embrayage, s'intercalant entre le point de pivotement du secteur denté 33 et l'arbre 20.

Selon l'invention, le dispositif de commande comporte en outre un moyen de freinage 50 couplé au mécanisme de liaison. Dans l'exemple représenté, le moyen de freinage agit directement sur l'arbre d'entraînement 24 du moteur électrique 23, sur la portion lisse 28 mentionnée ci-dessus. Selon l'exemple, il comporte au moins un patin de frottement en contact avec l'arbre 24 et sollicité vers celui-ci, suivant une direction sensiblement radiale par rapport audit arbre, par un ressort 52. Dans l'exemple plus spécifiquement représenté, il comporte en fait deux patins de frottement 53, 54 diamétralement opposés par rapport à l'arbre. Les patins et le ressort sont logés dans un boîtier cylindrique 56 comportant deux ouvertures diamétralement opposées par le passage de l'arbre 24. Ce boîtier 56 est immobilisé en rotation par rapport à l'arbre puisqu'il est logé à l'intérieur de la cavité 30. Ce boîtier est par ailleurs monté avec possibilité de déplacement suivant une direction radiale par rapport à l'arbre 24, pour permettre un autocentrage du moyen de freinage par rapport audit arbre. Le patin de freinage 53 est monté coulissant dans le boîtier 56 et il est appliqué contre l'arbre d'entraînement par le ressort 52 monté avec précontrainte de compression tandis que le patin de freinage 54 est situé entre une paroi de fond, parallèle à l'arbre 24, du boîtier 56 et l'arbre 24. Les patins 53 et 54 sont par exemple en matière plastique relativement rigide. Par conséquent, si le boîtier 56 est lui aussi réalisé en matière plastique, le patin 54 peut être venu de moulage avec ledit boîtier. L'autre paroi de fond de ce boîtier est constituée par un tronçon fileté 58 vissé dans une ouverture taraudée du boîtier. Ce tronçon fileté forme ainsi une butée mobile pour le réglage de la précontrainte du ressort 52.

Le moyen de freinage qui vient d'être décrit assure en toutes circonstances l'"irréversibilité" du système en ajoutant une composante de freinage plus fiable que celle qui est développée entre la portion filetée 25 et les pignons 34 et 35, cette composante de freinage étant éventuellement réglable.

## Revendications

1. Dispositif de commande d'un moyen d'accouplement tel qu'embrayage, variateur de vitesse, frein ou analogue, du type comportant un moteur électrique (23) muni d'un arbre d'entraînement (24), un organe d'actionnement (19, 20) dudit moyen d'accouplement et un mécanisme de liaison (31) comprenant notamment une vis sans fin et au moins un pignon en prise avec celle-ci, agencé entre ledit moteur et ledit organe d'actionnement, caractérisé en ce qu'il comporte un moyen de freinage (50) couplé audit arbre d'entraînement (24) dudit moteur (23).

2. Dispositif de commande selon la revendication 1, caractérisé en ce que ledit moyen de freinage (50) comporte au moins un patin de frottement (53) en contact avec ledit arbre et sollicité vers celui-ci, suivant une direction sensiblement radiale par rapport audit arbre, par un ressort (52).

3. Dispositif de commande selon la revendication 2, caractérisé en ce que ledit moyen de freinage comporte deux patins de frottement (53, 54) diamétralement opposés par rapport audit arbre.

4. Dispositif de commande selon la revendication 3, caractérisé en ce que ledit moyen de freinage comporte un boîtier (56) immobilisé en rotation par rapport audit arbre d'entraînement (24) et traversé par lui et en ce que ce boîtier renferme les deux patins de frottement (53, 54) précités.

5. Dispositif de commande selon la revendication 4, caractérisé en ce que l'un (54) des patins est situé entre une paroi de fond dudit boîtier et ledit arbre et en ce que l'autre patin (53) est monté coulissant dans ledit boîtier et est appliqué contre ledit arbre d'entraînement (24) par le ressort (52) précité monté avec précontrainte de compression dans ledit boîtier.

6. Dispositif de commande selon la revendication 5, caractérisé en ce que ledit boîtier (56) est monté avec possibilité de déplacement suivant une direction sensiblement radiale par rapport audit arbre d'entraînement (24) pour permettre un autocentrage du moyen de freinage par rapport à l'arbre d'entraînement.

7. Dispositif selon la revendication 5 ou 6, caractérisé en ce que le patin de frottement (54) situé entre ladite paroi de fond et l'arbre d'entraînement est venu de moulage avec ledit boîtier.

8. Dispositif selon la revendication 7, caractérisé en ce que l'autre paroi de fond dudit boîtier comporte ou est constituée par un tronçon fileté (58), vissé dans ledit boîtier et formant butée mobile pour le réglage de la précontrainte dudit ressort.

## Patentansprüche

1. Steuereinrichtung für ein Kupplungsmittel wie z.B. eine Kupplung, einen Drehzahlregler, eine Bremse oder ein ähnliches Teil, von der Art, die einen Elektromotor (23) enthält, der mit einer Antriebswelle (24) versehen ist, ein Betätigungsorgan (19, 20) für das genannte Kupplungsmittel und einen Verbindungsmechanismus (31), der insbesondere eine Schnecke und wenigstens ein damit in Eingriff stehendes Ritzel enthält, welches zwischen dem genannten Motor und dem genannten Betätigungsorgan eingebaut ist, dadurch gekennzeichnet, daß sie ein Bremsmittel (50) enthält, welches mit der genannten Antriebswelle (24) des genannten Motors (23) gekoppelt ist.

2. Steuereinrichtung nach Anspruch 1, dadurch gekennzeichnet, daß das genannte Bremsmittel (50) wenigstens ein Reibelement (53) enthält, das mit der genannten Welle in Kontakt steht und in Richtung auf diese durch eine Feder (52) beansprucht wird, und zwar in einer Richtung, die im wesentlichen radial zur genannten Welle verläuft.

3. Steuereinrichtung nach Anspruch 2, dadurch gekennzeichnet, daß das genannte Bremsmittel zwei Reibelemente (53, 54) enthält, die im Verhältnis zur genannten Welle diametral gegenüberliegen.

4. Steuereinrichtung nach Anspruch 4, dadurch gekennzeichnet, daß das genannte Bremsmittel ein Gehäuse (56) enthält, welches im Verhältnis zur genannten Antriebswelle (24) in der Drehbewegung arretiert ist und durch welches die Welle verläuft, und daß dieses Gehäuse die beiden vorgenannten Reibelemente (53, 54) umschließt.

5. Steuereinrichtung nach Anspruch 4, dadurch gekennzeichnet, daß eines der Elemente (54) zwischen einer Bodenwand des genannten Gehäuses und der genannten Welle sitzt, und daß das andere Element (53) gleitend im genannten Gehäuse angebracht und durch die vorgenannte Feder (52), die im genannten Gehäuse mit einer Vorspannung eingebaut ist, an der genannten Antriebswelle (24) anliegt.

6. Steuereinrichtung nach Anspruch 5, dadurch gekennzeichnet, daß das genannte Gehäuse (56) so angebracht ist, daß die Möglichkeit einer Verschiebung in einer im wesentlichen radial zur genannten Antriebswelle (24) verlaufenden Richtung besteht, um eine Selbstzentrierung des Bremsmittels im Verhältnis zur Antriebswelle zu erlauben.

7. Einrichtung nach Anspruch 5 oder 6, dadurch gekennzeichnet, daß das Reibelement (54), welches zwischen der genannten Bodenwand und der Antriebswelle sitzt, aus einem Stück mit dem genannten Gehäuse gepreßt ist.

8. Einrichtung nach Anspruch 7, dadurch gekennzeichnet, daß die andere Bodenwand des genannten Gehäuses einen Gewindeabschnitt (58) enthält oder aus diesem besteht, der in das genannte Gehäuse eingeschraubt ist und einen beweglichen Anschlag für die Einstellung der Vorspannung der genannten Feder bildet.

## Claims

1. A control mechanism for a coupling device such as a clutch, a variable speed drive, a brake or the like, of the kind comprising an electric motor (23) having a drive shaft (24), an actuating member (19, 20) for the said coupling device, and a linkage mechanism (31) including a worm element and at least one pinion in engagement with the worm member, arranged between the said motor and the said actuating member, characterised in that it includes a braking means (50) coupled to the said drive shaft (24) of the said motor (23).

2. A control mechanism according to Claim 1, characterised in that the said braking means (50) comprises at least one friction pad (53) in contact with the said shaft and biassed by a spring (52) towards the said shaft in a direction which is substantially radial with respect to the said shaft.

3. A control mechanism according to Claim 2, characterised in that the said braking means includes two friction pads (53, 54) diametrically opposed to each other in relation to the said shaft.

4. A control mechanism according to Claim 3, characterised in that the said braking means includes a housing (56), which is secured against rotation with respect to the said drive shaft (24), the latter extending through the said housing, and in that the said housing encloses both of the said friction pads (53, 54).

5. A control mechanism according to Claim 4, characterised in that one (54) of the said pads lies between an end wall of the said housing and the said shaft, and in that the other of the said pads (53) is mounted in the said housing for sliding movement therein, and is engaged against the said drive shaft (24) by the said spring (52) which is mounted in a precompressed condition in the said housing.

6. A control mechanism according to Claim 5, characterised in that the said housing (56) is mounted in such a way as to be displaceable in a direction which is substantially radial with respect to the said drive shaft (24), so as to permit the braking means to be automatically centred with respect to the drive shaft.

7. A control mechanism according to Claim 5 or Claim 6, characterised in that the friction pad (54) which is situated between the said end wall and the drive shaft is formed by moulding with the said housing.

8. A control mechanism according to Claim 7, characterised in that the other end wall of the said housing includes, or consists of, a threaded stud (58), screwed into the said housing and providing an abutment which is movable for the purpose of adjusting the precompression of the said spring.

# FIG.1

# FIG. 2